# EUROPEAN PATENT APPLICATION

(11) **EP 4 151 596 A1**
(43) Date of publication of application: **22.03.2023**
(21) Application number: 21197729.3
(22) Date of filing: 20.09.2021
(51) Int. Cl.: C01B 32/97, C30B 1/00

(54) **PROCESS AND APPARATUS FOR SILICON CARBIDE PRODUCTION BY MEANS OF A SOLID-STATE CARBOTHERMAL REDUCTION PROCESS**

(71) Applicant: Sicreate GmbH, 4060 Leonding (AT)
(72) Inventor: CALLEJO MUNOZ, David, I-20134 Milano (IT); USSEGLIO NANOT, Sandro, I-10094 Giaveno (TO) (IT); BONANOMI, Simone, I-20835 Muggiò (MB) (IT)
(74) Representative: Mati, Silvia

(57) **Abstract**

The present invention relates to a process and an apparatus for silicon carbide production. The process (900) for silicon carbide production comprises the steps of producing (901) a mixture comprising at least a carbon powder and a silica powder wherein the percentage by weight of carbon powder with respect to the total weight of the mixture, is at least about 25%; placing (902) said mixture in a crucible (6); - creating (903) a substantially inert atmosphere in an area at least partially surrounding the crucible (6); heating up (904) said crucible (6) by means of a heating device, for a first time interval (Δt₁) until reaching a working temperature (Tw) of at least 1.500 °C and lower than a melting temperature of the silica powder comprised in the mixture; maintaining (905) the crucible (6) within a working temperature range (Rw) comprised between 1.500°C and the melting temperature of the silica powder comprised in the mixture for a second time interval (Δt₂); and reducing (906) the temperature of the crucible (6) after said second time interval (Δt₂), preferably by deactivating said heating device; wherein said step of heating up (904) the crucible (6) by means of a heating device, comprises heating the crucible at an average heating rate of at least 75°C/minute.

## Description

### TECHNICAL FIELD

The present invention refers to the field of silicon carbide production. Particularly, the present invention relates to a process and an apparatus for the silicon carbide production, by means of a solid-state carbothermal reduction process.

### STATE OF THE ART

Silicon carbide (SiC) is a semiconductor with chemical and physical properties suitable for hard coatings applications or for the use in abrasive machining processes such as grinding, honing, water-jet cutting or sandblasting. Currently, silicon carbide is also widely used in the semiconductor industry because of its electrical characteristics which, differently to silicon, make it suitable for applications in high power, high frequency, and high temperature devices.

Silicon carbide occurs in nature as moissanite, an extremely rare mineral which is found in only minute quantities. Because natural moissanite is extremely scarce, most silicon carbide is synthetic. Nowadays, many processes to manufacture silicon carbide are known, which differ one from the other in terms of methodology used to carry out the reactions necessary for the formation of the compound, and which lead to different degrees of purity of the final product.

The simplest process to manufacture silicon carbide is to combine silica sand and carbon according to the Acheson method, which is based on heating a mixture of silicon dioxide (SiO₂), e.g. in the form of silica or quartz sand, and carbon, e.g. powdered coke, in a furnace. A graphite rod is embedded into the mixture and an electric current is passed through the graphite rod, which heats the mixture to about 1600 °C - 2500 °C. Accordingly, silicon dioxide surrounding the graphite rod is melted. As a result of the carbothermic reaction, a layer of silicon carbide is formed around the rod and carbon monoxide (CO) is emitted. The final compound of silicon carbide has a purity degree which depends on its distance from the graphite resistance, in particular by presenting impurities of Nitrogen and Aluminum, which disadvantageously affect the electrical conductivity of the compound.

Silicon carbide can also be produced by Chemical Vapor Deposition (CVD), namely a synthesis process that allows to obtain a deposit on a solid support, starting from a precursor that is introduced in gaseous form and decomposes on the surface of the substrate. Main advantages of using the CVD process are found in the homogeneity and purity degrees of the compound obtained; on the other hand, these processes are extremely expensive and involve the use of complex equipment for accurate process control, with particular regard to temperature control.

The need is therefore felt for an efficient process and apparatus that allow the production of a silicon carbide characterized by high purity.

### SUMMARY OF THE INVENTION

It is an object of the present invention to overcome the drawbacks of the prior art.

Particularly, it is an object of the present invention to provide a process and an apparatus for the production of silicon carbide which allow to reduce the reaction time compared to the state of the art, while keeping the processes energy consumption low.

Moreover, it is an object of a present invention to provide a process for the production of silicon carbide which entails a lower environmental impact than processes of the state of the art.

It is a further object of the present invention to provide a process and an apparatus for silicon carbide production, which allow to obtain a high purity material, namely a material having a purity degree higher than 99,95% by weight

It is a further object of the present invention to obtain an apparatus for the production of silicon carbide which allows to easily control and adjust the process parameters during the process steps.

Finally, an object of the present invention is to provide a process for the production of silicon carbide which is overall less expensive than the processes of the state of the art.

These and other objects of the present invention are achieved by means of a process and an apparatus incorporating the features of the appended claims, which form an integral part of the present description.

According to a first aspect, the invention relates to a process for silicon carbide production, comprising the steps of producing a mixture comprising at least a carbon powder and a silica powder wherein the percentage by weight of carbon powder with respect to the total weight of the mixture, is at least about 25% and placing said mixture in a crucible. Advantageously, the process comprises the step of creating a substantially inert atmosphere in an area at least partially surrounding the crucible. Moreover, the process also comprises the steps of heating up the crucible by means of a heating device, for a first time interval Δt₁ until reaching a working temperature Tw of at least 1.500 °C and lower than a melting temperature of the silica powder comprised in the mixture; maintaining the crucible within a working temperature range Rw comprised between 1.500°C and the melting temperature of the silica powder comprised in the mixture for a second time interval Δt₂; and reducing the temperature of the crucible after said second time interval Δt₂, preferably by deactivating said heating device. Particularly, the step of heating up the crucible by means of a heating device, comprises heating the crucible at an average heating rate of at least 75°C/minute.

The Applicant has realized that by performing the process in an inert atmosphere, heating the crucible up to a working temperature and maintaining the crucible within the working temperature range, it becomes possible to complete the carbo-reduction process in a solid phase, based on the reaction between the silica and the carbon in the mixture. Accordingly, the silica molecule (SiO₂) reacts with carbon forming as intermediate product Silicon monoxide (SiO) that at the reaction temperature is in gas phase. Silicon Monoxide successively reacts with the remaining carbon forming Silicon Carbide (SiC). All these reactions generate as by-products the evolution of gases such as CO and/or CO₂.

It has been proven that amorphous silica is the silicon dioxide phase which has the highest reactivity with graphite in the carbo-reduction formation of SiC. On the other hand, it is difficult to have high purity amorphous silica available at competitive prices, while high purity α-quartz powder is easily available at reasonable prices. During the heating process, the starting quartz powder undergoes to several phase transformation originating different polymorphs. In particular, at abruptly 573 °C the transformation from α-quartz to β-quartz takes place as a reversible transformation. Further increase of the temperature at around 1300°C originate the transformation from β-quartz to Cristobalite. This transformation is not reversible and bonds between atoms are broken and rearranged forming a more open structure with densities of about 2.53 g/cm³ producing a volume increase of around 17%. Moreover, it has been evidenced that there exists an additional intermediate phase transformation passing from β-quartz to cristobalite. First, the β-quartz phase will transform into an intermediate amorphous phase, and then the intermediate amorphous phase will transform into cristobalite phase. Amorphous silica is characterized by a higher reactivity with graphite to form SiC compared to quartz because of its unstructured surface is able to originate reactive heterogeneous energetic surface sites.

The applicant has realized that the heating rate strongly affect the formation and the relative amount of the different polymorphs. In particular, it has been evidenced that the transformation from quartz to amorphous silica is faster than the transformation from amorphous silica to cristobalite. This implies that faster heating rates favor the formation of amorphous silica with respect to cristobalite that conversely is preferred when slower heating rates are considered. The Applicant has surprisingly found that, in order to obtain an almost complete conversion of the Silica for the production of Silicon Carbide, it is advantageous to provide a predetermined heating ramp, preferably heating the crucible at an average heating rate of at least 75°C/min.

It has been evidenced that by using such ramp a high yield of SiC can be obtained without presence of residual cristobalite on the resulting SiC powder.

At the melting point of 1713°C, the cristobalite phase starts to melt into a highly viscous liquid. Accordingly, in the process according to the present invention, the melting point is never reached, keeping values below 1.600°C. In particular, the steps of heating the crucible up to a working temperature and maintaining the crucible within the working temperature range allow all the beta-quartz to transform into amorphous silica, this is a very fast reaction and takes few minutes. After this step, the temperature reaches about 1.500°C, thus activating the reaction from SiO₂ and the surrounding carbon.

Thus, the process according to the invention allows to significantly reduce the reaction time compared to the state of the art, while keeping the processes energy consumption low.

In accordance with a second aspect, the invention relates to an apparatus for the production of silicon carbide comprising a crucible configured to receive a mixture comprising at least a carbon powder and a silica powder wherein the percentage by weight of carbon powder with respect to the total weight of the mixture, is at least about 25% inert atmosphere creating means configured to create an inert atmosphere in an area at least partially surrounding the crucible. The apparatus further comprises a heating device configured to adjust the temperature of said crucible. The apparatus further comprises a programmable control unit configured to activate the inert atmosphere creating means to create an inert atmosphere in the area around the crucible; and activate said heating device to heat up said crucible for a first time interval until reaching a working temperature of at least 1.500 °C and lower than a melting temperature of the silica powder comprised in the mixture, at an average heating rate of at least 75°C/minute and to maintain the crucible within a working temperature range for a second time interval; and reduce the temperature of the crucible after said second time interval, preferably by deactivating said heating device.

Advantageously, the so configured apparatus for the production of silicon carbide leads to the same advantages as described with reference to the process for silicon carbide production according to the invention.

The present invention may have at least one of the following preferred features that can be combined with each other as desired in order to meet specific application needs.

Preferably, the steps of heating up the crucible and maintaining the crucible at said working temperature comprise heating at least a surface of the crucible.

According to this preferred configuration, it is avoided to contaminate the material contained in the crucible, e.g. due to the irradiation performed by heating elements positioned inside the crucible (e.g. resistive elements).

Preferably, the step of heating up the crucible by means of a heating device, comprises heating the crucible at an average heating rate of at least 95°C/minute.

More preferably, the step of heating up the crucible by means of a heating device, comprises heating the crucible at an average heating rate of about 100°C/minute.

Preferably, the area around the crucible is defined around a hot-zone provided inside an airtight container.

Preferably, the crucible has an elongated shape extending along an extension axis, the crucible being preferably positioned in the area at least partially surrounding the crucible so that its extension axis is substantially aligned to the vertical direction.

Preferably, the crucible conformation and its positioning inside the hot-zone are configured to obtain a temperature difference less than 50°C inside the crucible volume.

In this way, it is advantageously achieved that the carbo-reduction reaction occurs efficiently and substantially in the whole internal volume defined by the crucible.

Preferably, an internal pressure of the airtight container is controlled to be substantially maintained at a predetermined pressure value at least during the steps of heating up the crucible until reaching said working temperature and maintaining the crucible within said working temperature range.

Preferably, the airtight container comprises a first outlet section and the step of controlling the internal pressure of the airtight container comprises controlling the first outlet section to discharge gas when the internal pressure reaches the predetermined pressure value.

This allows to ensure to keep the pressure below a predetermined limit value, while the temperature increases, in a simple and economical way.

Preferably, the process comprises an additional step of creating an inert atmosphere in an area at least partially surrounding the crucible, performed after the step of reducing the temperature of the crucible after the second time interval.

This advantageously allows removing impurities in the vapor state from the work area, by discharging them through the first outlet section, in order to further increase the degree of purity of the silicon carbide obtained by the process, thereby obtaining a purity degree higher than 99,95% by weight.

Preferably, the percentage by weight of carbon powder is at least about 25% by weight with respect to the total weight of the mixture and less than about 55% by weight with respect to the total weight of the mixture.

These carbon powder values advantageously allow to reach a high degree of purity of the final product, while ensuring the efficiency of the process, in particular in terms of yield.

Preferably, the mixture comprises silica powder in a percentage of at least about 45% by weight with respect to the total weight of the mixture, and preferably less than about 75%.

In a preferred embodiment of the present invention the average size of the carbon granules contained in the preliminary mixture is comprised between about 5 µm and about 5 mm; more preferably between about 25 µm and about 3 mm, even more preferably between about 50 µm and about 2 mm.

Advantageously, these values ensure the efficiency and reliability of the silicon carbide production process.

In a further preferred embodiment of the present invention, the average size of the silica granules contained in the preliminary mixture is less than about 300 µm.

Advantageously, these values have been selected to allow the silica to be kept in the solid phase during the silicon carbide production process.

The above particle-sizes make it possible that the process is advantageously carried out with an optimal yield, namely greater than at least 80%, preferably 85%, more preferably 90%.

In a preferred embodiment, the silica powder is selected from the group consisting of:
- quartz sands,
- pure quartz,
- silica powder deriving from agricultural sources,
- cristobalite, or
- a mixture thereof.

The use of this specific silica powder advantageously allows saving energy and therefore costs for carbo-reduction activation, compared to what would be required using pure silica.

In a preferred embodiment of the present invention, the process comprises the step of detecting the amount of CO and/or CO2 inside said airtight container.

The concentration of these gases varies during the carbo-reduction process; therefore, the programmable control unit can be configured to analyze the values detected, monitor the progress of this reaction and possibly adjust the heating device accordingly.

In a preferred embodiment of the present invention, the process comprises the step of detecting the pressure inside said airtight container.

In a preferred embodiment of the present invention, the process comprises the step of detecting the temperature inside said airtight container.

This advantageous allows acquiring further information on the correct development of the reactions taking place during the production process and adjust the heating device accordingly.

Preferably, the internal pressure of said airtight container is controlled by means of a programmable control unit.

Preferably, the programmable control unit is configured to activate the heating device to heat up said crucible at an average heating rate of at least 75 °C/minute, more preferably of about 100°C /minute.

In a preferred embodiment of the present invention, the step of creating an inert atmosphere is performed by introducing an inert gas flow into said airtight container through a first inlet section.

Preferably, said inert gas is Argon.

This advantageously allows achieving a suitable reduction of the oxygen in the airtight container in a simple and economical way, while preventing a degradation of the same due for example to oxidative phenomena.

In an alternative embodiment, the step of creating an inert atmosphere is performed by drawing oxygen from the airtight container by means of a vacuum pump.

In a preferred embodiment of the present invention, the second time interval Δt₂ is comprised between 5 minutes and 90 minutes.

Preferably, the crucible has a maximum transverse dimension D_{MAX} lower than or equal to about 350 mm.

In the present description and in the appended claims with "maximum transverse dimension D_{MAX}" the diameter of a section of an equivalent cylinder containing the crucible is meant.

Advantageously, a substantially uniform temperature is obtained inside the crucible, which allows achieving suitable conditions to ensure the efficiency of the reactions that are carried out during the production process steps.

In a preferred embodiment of the present invention, the apparatus comprises a first sensor arranged and configured to detect the amount of CO and/or CO2 inside the airtight container.

In a preferred embodiment of the present invention, the apparatus comprises a second sensor arranged and configured to detect the pressure inside the airtight container.

In a preferred embodiment of the present invention, the apparatus comprises a third sensor arranged and configured to detect the temperature inside the airtight container.

This advantageously allows detecting the value of the most appropriate parameter to correctly evaluate the development of the reactions occurring during the production process.

Preferably, the programmable control unit is operatively associated with at least one between a first sensor arranged and configured to detect the amount of CO and/or CO₂ inside the airtight container, a second sensor arranged and configured to detect the pressure inside the airtight container and a third sensor arranged and configured to detect the temperature inside the airtight container, the programmable control being configured for controlling at least said heating device based on the values detected by at least one of said sensors.

In a preferred embodiment of the present invention, the hot-zone is defined inside a hot-zone cover which has an elongated shape extending along the vertical direction and which comprises at least one layer of refractory material.

Preferably, the crucible comprises one or more side walls which define an outer surface of the crucible and the layer of refractory material is configured so as to be at least partially in contact with the outer surface of the crucible.

Preferably, the hot-zone cover comprises a mantel element external to the at least one layer of refractory material.

In an alternative embodiment, the hot-zone cover comprises a single insulation layer such as carbon or graphite felt layer.

The use of a refractory element advantageously allows to shield the furnace components outside the hot-zone and at the same time reduces the heat dispersion increasing the heating efficiency.

Preferably, the heating device comprises at least one heating element arranged in the airtight container so as to be in contact with an outer surface of the hot-zone cover.

According to this preferred configuration, a correct and uniform heating of the crucible is advantageously achieved.

More preferably, the heating device comprises an inductor wrapped around the hot-zone cover substantially along its entire extension.

Advantageously, the use of inductors allows dynamically and quickly generating the proper thermal gradients, required to obtain the desired temperatures in a relatively short time.

In a preferred embodiment of the present invention, the inert atmosphere creating means are an oxygen removing device which comprises an inert gas supplying device connected to at least a first inlet section of the airtight container and a relief valve connected to a first outlet section, the inert gas supplying device and the relief valve being optionally operatively connected to the programmable control unit.

In an alternative embodiment of the present invention, the inert atmosphere creating means are an oxygen removing device comprises a vacuum generation device connected to a first outlet section of the airtight container and optionally operatively connected to the programmable control unit.

In a preferred embodiment of the present invention, the airtight container comprises a closed outer wall forming a first jacket and a closed inner wall forming a second jacket, the outer wall being arranged with respect to the inner wall so as to form an interspace between said outer wall and said inner wall, the interspace being configured so as to receive a cooling fluid flowing from a second inlet section to a second outlet section, both obtained on the outer wall.

Preferably, the airtight container has an elongated shape extending along the vertical direction and the interspace extends substantially along the entire extension of the airtight container.

This allows ensuring a further control of the temperature of the container in a simple and inexpensive way by performing a suitable cooling of the same.

In a further preferred embodiment of the present invention, the crucible comprises a bottom wall which defines, together with said one or more side walls, an inner volume in which at least one separation element is arranged, the separation element extending substantially parallel to said bottom wall.

Advantageously, the use of separation elements allows creating turbulence in the inner atmosphere of the crucible, in order to control outgassing phenomena.

Further features and advantages of the present invention will become apparent from the following detailed description of some preferred embodiments thereof depicted in the appended drawings.

### BRIEF DESCRIPTION OF THE DRAWINGS

The invention will be described below with reference to some exemplary and non-limiting embodiments shown in the annexed drawings related to different aspects of the present invention.
Figures 1a and 1b are schematic views of an apparatus according to a first and a second embodiment of the present invention;
Figures 2a, 2b and 2c shows a partial section view of a detail of the apparatus of Figure 1a or 1b according to alternative embodiments;
Figures 3a, 3b, 3c, 3d and 3e schematically illustrate a detail of the apparatus according to alternative embodiments of the present invention; and

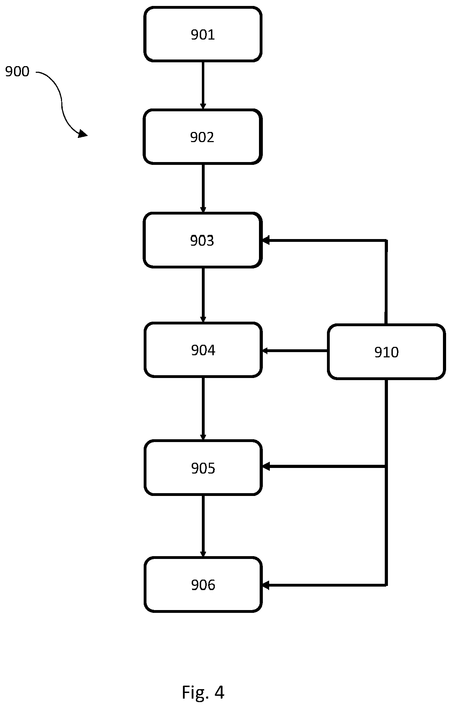

Figure 4 is a flow diagram of a process for silicon carbide production, according to an embodiment of the present invention.

### DETAILED DESCRIPTION OF THE INVENTION

While the invention can be implemented in several alternative ways, some preferred embodiments are shown in the drawings and will be described in detail in the following. It should be understood, however, that there is no intention to limit the invention to the specific disclosed embodiments but, on the contrary, the invention intends to cover all the modifications, alternative constructions and equivalents that fall within the scope of the invention as defined in the claims.

The use of "for example", "etc.", "or" denotes non-exclusive alternatives without limitation, unless otherwise noted. The use of "includes" means "includes, but not limited to", unless otherwise noted.

In the present description and in the subsequent claims, the term "area" is intended to indicate a portion of space optionally defined inside a container, for example a processing chamber, which can be partially or totally closed with respect to the external environment.

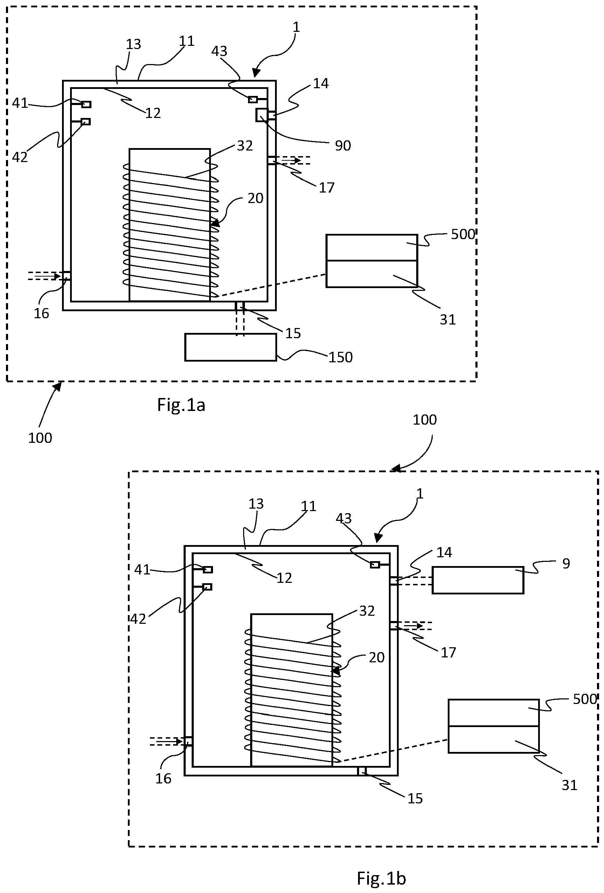

Figure 1a shows a portion of an apparatus 100 according to an embodiment of the present invention, which comprises a crucible 6 positioned in an area at least partially surrounding it, provided inside an airtight container 1.

In further preferred embodiments of the present invention (not shown in the Figures), the crucible 6 can be placed in a tunnel furnace where it can move toward different zones having the selected temperature in order to obtain the desired thermal conditions for carboreduction reaction. Alternatively, the crucible can be considered as a tube for a rotary tubular furnace, wherein the reagent (silica and carbon) move toward an heated tube portion where the carbothermal reaction occurs by adjusting the tube inclination and the rotation speed.

According to both embodiments of Figures 1a and 1b, the airtight container 1 is configured to create a thermal barrier and can be formed by one or more walls configured so as to form several superimposed containment layers, preferably made of metallic material. Preferably, the airtight container 1 comprises a closed outer wall 11 along which a first outlet section 14 and a first inlet section 15 are formed; the first inlet section 15 and the first outlet section 14 are configured respectively to allow supplying a fluid inside the airtight container 1 and discharge a fluid from the same. Preferably, the supply and discharge are carried out in a controlled manner, by means of suitable devices (not illustrated) connected to the first inlet section 15 and the first outlet section 14, respectively.

The airtight container 1 of Fig. 1 comprises a closed outer wall 11, forming a first jacket, and a closed inner wall 12, forming a second jacket. Particularly, the outer wall 11 is arranged with respect to the inner wall 12 so as to form an interspace 13 between the outer 11 and the inner 12 walls. The interspace 13 extends substantially along the entire extension of the airtight container 1. Preferably, the interspace 13 is configured so as to receive a cooling fluid, flowing between a second inlet section 16 and a second outlet section 17, both obtained on a respective portion of the outer wall 11.

The airtight container 1 of Figures 1a and 1b defines inside a hot-zone 20 configured to accommodate at least one crucible 6 having an elongated shape. When housed inside the hot-zone 20 the crucible 6 shows a shape mainly extending along an extension axis A which is aligned to the vertical direction. The crucible 6 comprises one or more side walls 61 which define a lateral inner surface 62 and a lateral outer surface 63. The crucible 6 further comprises a bottom wall 64 which define a bottom inner surface 64' and a bottom outer surface 64"; the bottom wall 64 defines, together with said one or more side walls 61, an inner volume configured to contain a volume of material that will be processed.

The crucible 6 has an upper opening 65 which gives access to the crucible inner volume and allows introducing the material to be processed. The upper opening 65 is arranged in fluid connection with the inner volume of the airtight container 1. The crucible optionally comprises a cover element 66 which selectively closes the upper opening 65.

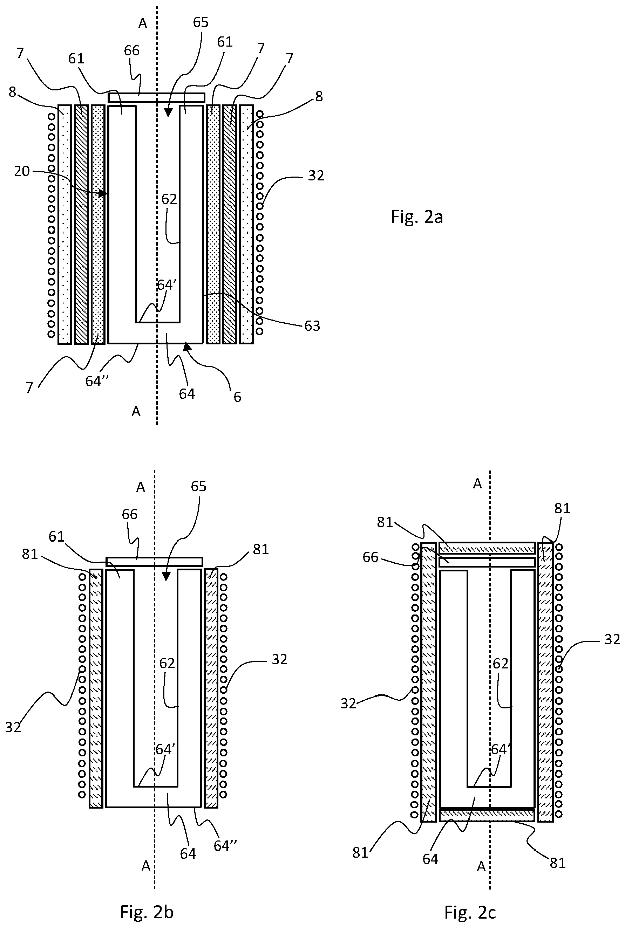

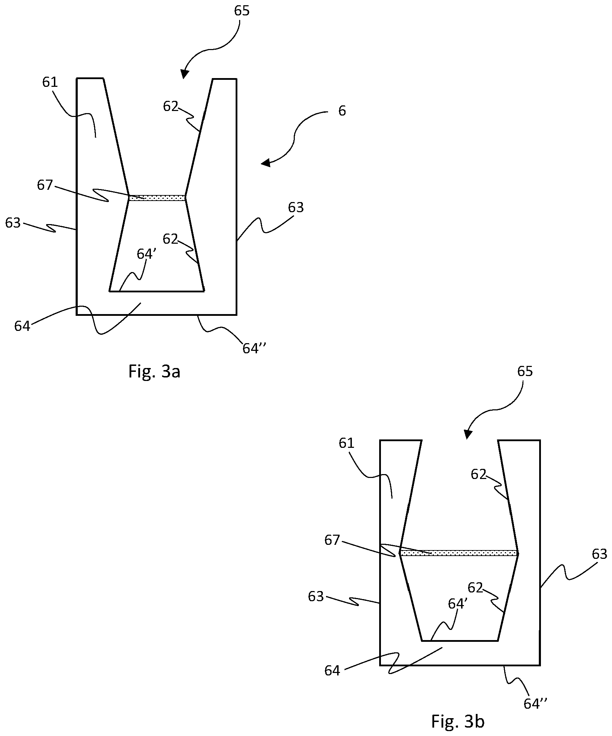

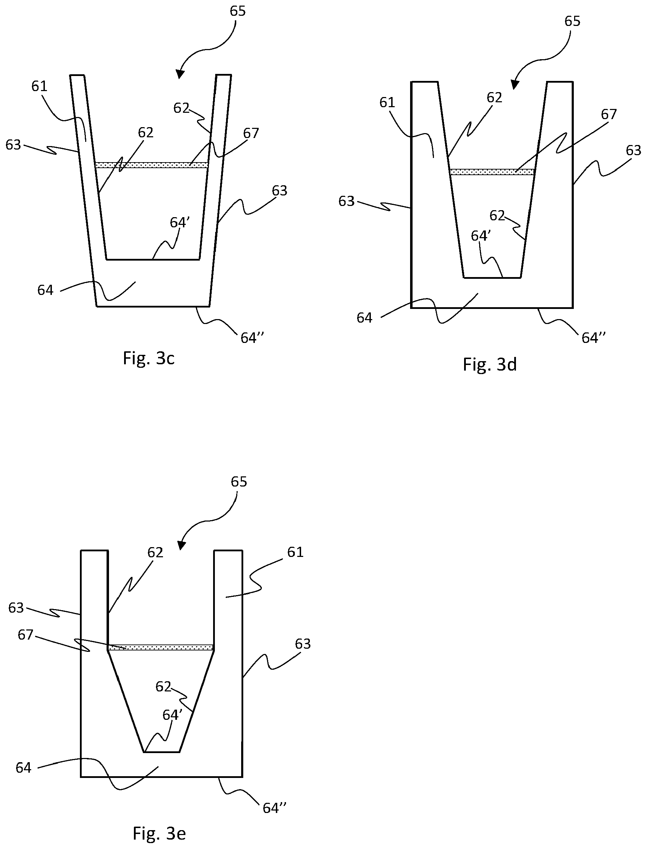

The crucible 6 can be obtained according to various shapes and sizes; typically, it has a cylindrical shape as shown in Figures 2a - 2c. In alternative exemplary embodiments, the crucible 6 has the shape of a double conical body (as shown in Figures 3a and 3b) or of an inverted simple conical body (as shown in Figures 3c and 3d), or it is formed by the combination of a conical portion and a cylindrical portion (as shown in Figure 3e).

According to the embodiment of Figure 2a, the hot-zone 20 is defined inside a hot-zone cover that comprises at least one layer 7 of refractory material. Preferably, the crucible 6 is shaped so as to substantially leave no free spaces between the crucible lateral outer surface 63 and the hot-zone cover. The hot-zone cover of Figure 2a further comprises a mantel element 8, which extends lengthwise in the axial direction A, externally to the at least one layer 7 of refractory material. The layers 7 of refractory material are preferably made of zirconia sand, or zirconia wool, or alumina; the mantel element 8 is advantageously made of material substantially unalterable at high temperatures, for example of quartz, zirconia, or their derivatives.

In a simplified embodiment (as shown in Figures 2b and 2c) the mantel element 8 and the refractory material 7 can be replaced by a single element of insulation material such as carbon or graphite felt layer 81. This solution also allows to reduce the time of the process since a very fast heating can be applied without damage/cracking of the refractory material.

The shape and dimensions of the crucible 6 are advantageously chosen so as to obtain a temperature difference within 50°C inside the crucible volume with respect to a perpendicular plane to the extension axis.

Preferably, the maximum transverse dimension D_{MAX} of the crucible 6 is lower than or equal to about 400 mm, more preferably lower than or equal to about 350 mm.

The apparatus 100 further comprises a heating device comprising a power supply device 31 and at least one heating element 32, arranged in the airtight container 1 and configured to adjust the temperature of the hot-zone 20.

In accordance with the embodiments of Figures 2a -2c, the power supply device 31 comprises a radio frequency generator and the heating element 32 comprises an inductor, wrapped around the hot-zone cover, preferably substantially along its entire vertical extension.

The inductor can be made of copper, or metal alloys containing copper, and is preferably shaped according to a spiral, arranged so as to surround the hot-zone cover. The inductor generates an electromagnetic field which is applied to the hot-zone cover, thereby generating heat at the crucible surfaces 62, 63, 64', 64".

The inductor is advantageously selected based on the shape of the crucible and/or the specific process to be carried out through the apparatus 100; by way of an example, it is possible to configure the spiral section according to a cylindrical, or rectangular, or elliptical or square shape, and/or provide a constant or variable pitch of the spiral.

The apparatus 100 of Figure 1a further comprises a plurality of sensors, arranged inside the airtight container 1 and suitable for measuring relevant parameters, useful for the management of the process implemented, such as temperature, pressure, or the amount of some elements (e.g. CO and/or CO₂). More in detail, the apparatus 100 of Figure 1a comprises a first sensor 41 arranged and configured to detect the amount of CO and/or CO₂ inside the airtight container 1, a second sensor 42 arranged and configured to detect the pressure inside the airtight container 1 and a third sensor 43 arranged and configured to detect the temperature inside the airtight container 1. By way of an example, the amount of CO gives an indication of the reaction development. Accordingly, based on a signal generated by the first sensor 41 the switching-off of the apparatus 100 may be controlled.

The apparatus 100 of Figure 1a further comprises a programmable control unit 500 operatively connected to at least one of the first sensor 41, the second sensor 42 and the third sensor 43, and configured to control at least the heating device based on the values detected by at least one of the sensors. This advantageously allows automatically regulating the temperature of the material contained in the crucible 6 based on the measurements performed by the sensors 41,42,43.

The apparatus 100 is further provided with inert atmosphere creating means configured to create an inert atmosphere in an area at least partially surrounding the crucible 6. According to the embodiment of Figures 1a and 1b the inert atmosphere creating means are constituted by an oxygen removing device configured to discharge oxygen from the airtight container 1. According to the embodiment of Figure 1a, the oxygen removing device comprises an inert gas supplying device 150 connected to the first inlet section 15 and a relief valve 90 connected to the first outlet section 14. The inert gas supplying device 150 and the relief valve 90 are preferably operated through the programmable control unit 500.

In an alternative embodiment shown in Figure 1b, the oxygen removing device comprises a vacuum generation device 9 connected to the first outlet section 14 and preferably operated by the programmable control unit 500.

A preferred embodiment of a process 900 for silicon carbide production according to the present invention is described in the following.

At first, a mixture comprising at least a carbon powder and silica powder is prepared (step 901). The silica powder used for the mixture is preferably quartz sands, pure quartz, silica powder deriving from agricultural sources or from other silica phases such as cristobalite or a mixture thereof. The carbon powder is preferably obtained from recyclable graphite or from carbon deriving from agricultural sources.

If necessary, the above materials are first ground through mills, preferably of the impact type in order to obtain a high quality of the granules. If necessary, the granules are subsequently dried in air at a temperature preferably comprised between 150°C and 200°C, in order to remove any residual humidity.

The so obtained powders are then mixed according to a ratio which preferably includes carbon powder in a percentage of at least about 25% by weight with respect to the total weight of the mixture, and preferably less than about 55% by weight with respect to the total weight of the mixture. Accordingly, the mixture comprises silica powder in a percentage of at least about 45% by weight with respect to the total weight of the mixture, and preferably less than about 75%.

According to an alternative embodiment, the mixture further comprises silicon carbide powder. The silicon carbide powder preferably derives from previous industrial processes. The use of silicon carbide in the initial mixture advantageously allows considerably limiting the costs of the materials and reducing the ambient impact of the process by partially using recycled material.

The particle-size of the powders used to produce the initial mixture is specifically selected to achieve particular results of the silicon carbide production process.

In detail, the average size of the carbon granules contained in the mixture is preferably selected between about 5 µm and about 5 mm, more preferably between about 25 µm and about 3 mm, even more preferably between about 50 µm and about 2 mm.

The average size of the silica granules contained in the mixture is preferably less than about 300 µm, more preferably less than about 150 µm.

Alternatively, silica and carbon powder can be mixed accordingly to the previously defined weight ratio and granulometries and then pressed to obtain granules or pellets with diameter between 5 mm and 10 mm.

Furthermore, graphite is preferably used as a "matrix" (i.e. it has a sort of "seed" function for the growth of the granules during the process), to properly define the granulometry of the final product, that falls within the range 5µm ― 5mm.

Once the mixture is prepared, it is placed in the crucible 6 comprised in the hot-zone 20 of the airtight container 1 (step 902). The inner volume of the crucible 6 is preferably filled with the mixture until it reaches a maximum level equal to about 80% of its height, that is its dimension along the extension axis, starting from the bottom inner surface 64' of the bottom wall 64. More preferably the inner volume of crucible 6 is filled to a level equal to approximately 70% of its height.

Once the material is placed in the crucible, a substantially inert atmosphere is created (step 903) in an area at least partially surrounding the crucible 6. Preferably the step of creating a substantially inert atmosphere is performed by discharging the oxygen from the airtight container 1 through the first outlet section 14. This advantageously removes any residual oxygen in the chamber, which could bind with carbon and decrease the quantity available for reacting with silica.

In a preferred embodiment, the removal of oxygen from the airtight container 1 is performed by introducing an inert gas, e.g. Argon, into the airtight container 1 through a first inlet section 15. Preferably, the inert gas is introduced in the airtight container 1 by means of the gas supplying device 150.

In an alternative preferred embodiment, the step of removing oxygen 903 is performed by means of a vacuum generation device 9, connected to the first outlet section 14 and operatively connected to the programmable control unit 500.

Once an inert atmosphere inside the airtight container 1 is obtained, the process provides for heating up (step 904) the crucible 6 for a first time interval Δt1, by activating a heating device, until reaching a working temperature Tw of at least 1500°C and lower than the melting temperature of the silica powder comprised in the mixture. As is well known, the melting temperature of silica differs according to its physical state; for example, the melting temperature of amorphous silica is around 1630°C and the melting temperature of Cristobalite is about 1713°C.

According to the invention, the step of heating up the crucible by means of a heating device, comprises heating the crucible at an average heating rate of at least 75°C/minute, preferably less than 400°C/minute. In a preferred embodiment, the step of heating up the crucible is performed at an average heating rate of at least 95°C/minute or, even more preferably, at a heating rate of about 100°C/minute.

In a preferred embodiment of the present invention the steps of heating up the crucible until reaching the working temperature Tw and maintaining it within the working temperature range Rw comprise heating up the surfaces 62, 63, 64', 64" of the crucible 6.

The process further comprises the step of maintaining (step 905) the crucible 6 within a working temperature range Rw comprised between 1.500°C and the melting temperature of the silica powder comprised in the mixture for a second time interval Δt₂ and reducing (step 906) the temperature of the crucible 6, preferably by deactivating the heating device after said second time interval Δt₂ has expired.

In a preferred embodiment of the present invention, the second time interval Δt₂ is comprised between 5 and 90 minutes, depending also on the reagents quantities.

Provision is further made of a step of controlling (step 910) the internal pressure of the airtight container 1, preferably by means of gas discharging through said at least first outlet section 14, at least during the steps of heating up the crucible until reaching the working temperature T_{w} and maintaining the crucible 6 within the working temperature range Rw.

Preferably, the step of controlling the internal pressure of the airtight container comprises controlling the first outlet section 14 to discharge gas, when the internal pressure reaches a predetermined pressure value.

More in detail, the internal pressure of the airtight container 1 varies according to the steps carried out during the production process and can be maintained at a predetermined substantially constant value, for example through the relief valve 90 arranged in connection with the first outlet section 14.

According to a preferred embodiment, the step of controlling 910 the internal pressure of the airtight container 1 can be performed by the programmable control unit 500 by controlling the relief valve 90 based on the pressure values detected by the second sensor 42.

Preferably, the process of the present invention further comprises an additional step of creating an inert atmosphere in an area at least partially surrounding the crucible 6, the additional step being performed after the step of reducing the temperature of the crucible 6 after said second time interval Δt₂. Preferably said additional step of creating an inert atmosphere is performed at least until the crucible 6 reaches a temperature of about 600°C, more preferably about 400°C.

In a preferred embodiment, the process comprises the steps of detecting the amount of CO and/or CO₂ inside said airtight container, by means of the first sensor 41 operatively associated with the programmable control unit 500.

In a preferred further embodiment, the process comprises the steps of detecting the temperature inside said airtight container 1 by means of the third sensor 43 operatively associated with the programmable control unit 500.

The invention, thus conceived, is susceptible of numerous modifications and variations, all of which fall within the scope of the inventive concept that characterizes the invention.

For example, the crucible 6 further comprises at least one separation element 67 (such as shown in figures 3a, 3b, 3c, 3d and 3e), extending substantially parallel to the bottom wall 64 of the crucible. Preferably said separation element 67 has a partially open structure (e.g. a honeycomb structure or is made by means of a grate) and is configured to allow the fluid connection between adjacent parts of the crucible, as well as to create turbulence in the inner atmosphere of the crucible 6, in order to avoid outgassing phenomena.

In an alternative embodiment (not shown in the Figures), the heating element 32 comprises at least a resistor, preferably directly connected to the crucible 6; in a further possible embodiment, the heating element 32 comprises at least a resistor connected to the airtight container 1. According to both above embodiments, the hot-zone 20, is defined by the area contained within the perimeter identified by the elements connected to the heating resistor. More in detail, if the resistor is connected to the walls of the airtight container 1, the hot-zone is defined by the space enclosed in the sealed container.

Other technically equivalent details and materials may be used, as well as the shapes and the dimensions and distances of the various components, may be any according to the requirements.

## Claims

1. A process (900) for silicon carbide production, comprising the steps of:
- producing (901) a mixture comprising at least a carbon powder and a silica powder wherein the percentage by weight of carbon powder with respect to the total weight of the mixture, is at least about 25%;
- placing (902) said mixture in a crucible (6);
- creating (903) a substantially inert atmosphere in an area at least partially surrounding the crucible (6);
- heating up (904) said crucible (6) by means of a heating device, for a first time interval (Δt₁) until reaching a working temperature (Tw) of at least 1.500 °C and lower than a melting temperature of the silica powder comprised in the mixture;
- maintaining (905) the crucible (6) within a working temperature range (Rw) comprised between 1.500°C and the melting temperature of the silica powder comprised in the mixture for a second time interval (Δt₂); and
- reducing (906) the temperature of the crucible (6) after said second time interval (Δt₂), preferably by deactivating said heating device;
wherein said step of heating up (904) the crucible (6) by means of a heating device, comprises heating the crucible at an average heating rate of at least 75°C/minute.

2. The process (900) of claim 1, wherein said step of heating up (904) the crucible (6) by means of a heating device, comprises heating the crucible at an average heating rate of at least 95°C/minute, preferably of about 100°C/minute.

3. The process (900) of claim 1 or 2, wherein the steps of heating up (904) the crucible (6) until reaching said working temperature (Tw) and maintaining (905) the crucible (6) within said working temperature range (Rw) comprise heating at least a surface (62, 63, 64', 64") of the crucible (6).

4. The process (900) of the preceding claims, further comprising at least one of:
- the average size of the carbon granules contained in the mixture is comprised between about 5 µm and about 5 mm; and
- the average size of the silica granules contained in the mixture is less than about 300 µm.

5. The process (900) of any one of the preceding claims, wherein the area around the crucible (6) is defined around a hot-zone (20) provided inside an airtight container (1).

6. The process (900) of claim 5, wherein an internal pressure of said airtight container (1) is controlled (910) to be substantially maintained at a predetermined pressure value at least during the steps of heating (904) up the crucible until reaching said working temperature (Tw) and maintaining (905) the crucible within said working temperature range (Rw).

7. The process (900) of claim 6, wherein the airtight container (1) comprises a first outlet section (14) and the step of controlling (910) the internal pressure of said airtight container (1) comprises controlling said first outlet section (14) to discharge gas when the internal pressure reaches the predetermined pressure value.

8. The process (900) of any one of claims 5 to 7, further comprising at least one of the following steps of:
- detecting the amount of CO and/or CO2 inside said airtight container (1),
- detecting the pressure inside said airtight container (1), and
- detecting the temperature inside said airtight container (1).

9. The process (900) of any one of claims 5 to 8, wherein the step of creating an inert atmosphere (903) is performed by drawing oxygen by means of a vacuum pump from said airtight container (1) and/or by introducing an inert gas flow into said airtight container (1) through a first inlet section (15).

10. An apparatus (100) for the production of silicon carbide comprising:
- a crucible (6) configured to receive a mixture comprising at least a carbon powder and a silica powder wherein the percentage by weight of carbon powder with respect to the total weight of the mixture, is at least about 25%;
- inert atmosphere creating means configured to create an inert atmosphere in an area at least partially surrounding the crucible (6);
- a heating device configured to adjust the temperature of said crucible (6);
and
- a programmable control unit (500) configured to
- activate the inert atmosphere creating means to create an inert atmosphere in the area around the crucible (6);
- activate said heating device to heat up said crucible (6) for a first time interval (Δt₁) until reaching a working temperature (Tw) of at least 1.500 °C and lower than a melting temperature of the silica powder comprised in the mixture, at an average heating rate of at least 75°C/minute and to maintain the crucible (6) within a working temperature range (Rw) comprised between 1.500°C and the melting temperature of the silica powder comprised in the mixture for a second time interval (Δt₂); and
- reduce the temperature of the crucible (6) after said second time interval (Δt₂), preferably by deactivating (906) said heating device.

11. The apparatus (100) of claim 10, wherein the programmable control unit (500) is configured to activate said heating device to heat up said crucible (6) at an average heating rate of at least 95°C/minute, preferably of about 100°C/minute.

12. The apparatus (100) of claim 10 or 11, wherein the area partially surrounding the crucible is an area partially surrounding a hot-zone (20) provided inside an airtight container (1), the hot-zone (20) being preferably defined inside a hot-zone cover (7; 8) comprising at least one layer of refractory material (7), and, optionally, a mantel element (8) external to the at least one layer of refractory material (7).

13. The apparatus (100) of claims 12, wherein
- the heating device comprises at least one heating element (32) arranged in the airtight container (1) so as to be in contact with a lateral outer surface of the hot-zone cover (7; 8); and/or
- the heating device comprises at least one inductor wrapped around the hot-zone cover (7; 8).

14. The apparatus (100) of any one of claims 10 to 13, wherein the crucible (6) shape and its positioning inside the hot-zone (20) are configured to obtain a temperature difference less than 50°C inside the crucible (6) volume.

15. The apparatus (100) of any one of claims 10 to 14, wherein said crucible (6) has a maximum transverse dimension (D_{MAX}) lower than or equal to about 350 mm.
